# EUROPEAN PATENT APPLICATION

(11) **EP 2 849 060 A1**
(43) Date of publication of application: **18.03.2015**
(21) Application number: 13884373.5
(22) Date of filing: 14.08.2013
(51) Int. Cl.: G06F 9/445

(54) **MOBILE TERMINAL AND APPLICATION PROGRAM MANAGEMENT METHOD THEREOF**

(30) Priority: 04.06.2013 CN 201310220172
(71) Applicant: Huizhou TCL Mobile Communication Co., Ltd., Huizhou, Guangdong 516006 (CN)
(72) Inventor: YANG, Zhibing, Huizhou Guangdong 516006 (CN)
(74) Representative: D'Halleweyn, Nele Veerle Trees Gertrudis
(86) International application number: PCT/CN2013/081458
(87) International publication number: WO 2014/194573

(57) **Abstract**

An application management method for a mobile terminal is disclosed. The method comprises: acquiring all information of applications that have been installed or upgraded in the mobile terminal; determining whether each of the applications has a desktop widget; and if the determination result is "yes", then displaying an icon corresponding to an application having the desktop widget in an icon list in a first displaying manner. In this way, the user can accomplish the operation of adding the desktop widget of the application directly in the system application main menu without having to enter into the widget list. The present disclosure is simple and convenient to use and provides the user with good experience in use.

## Description

### FIELD OF THE INVENTION

The present disclosure generally relates to the technical field of communication technologies, and more particularly, to an application management method for a mobile terminal and the mobile terminal.

### BACKGROUND OF THE INVENTION

Nowadays, with the continuous advancement of the wireless communication technologies, use of mobile terminals such as smart mobile phones is becoming more and more popular. The mobile phones are used not only to make a call, send a short message and function as an alarm clock, but also provide functions of a computer, e.g., to surf the Internet and to download software. Furthermore, the mobile phones can now log in more and more websites and the Internet connection speed becomes ever faster, so people can now install more applications depending on their own needs, for example, communication software, game software, music playing software, map software, graphic processing applications, file processing applications and so on.

Owing to use of a virtual keypad, the smart mobile phones and tablet computers are now provided with a larger screen. Correspondingly, the functions of the mobile terminal screens become increasingly more powerful, and the screens can not only display various application icons, but also display widgets of various applications to facilitate the user's operation. By use of the desktop widgets, the user can directly operate applications. For example, a music player desktop widget allows the user to directly view information and lyrics of a piece of music and to control the music playing. Desktop widgets of different applications are different depending on their functions and occupied areas, and even if the same kind of application desktop widgets may also be categorized into different types. For example, the music playing widgets are categorized into the simple type and the complex type depending on the occupied areas. The simple type occupies a smaller desktop space and comprises fewer functions, so it can only be used for music playing control but cannot display the lyrics; and the complex type occupies a larger desktop space and comprises more functions, so it can display the music lyrics.

The application desktop widgets bring about conveniences to the users, and the users often need to add desktop widgets of applications in the system to the desktop of the mobile phone. However, the operations of adding an application desktop widget are relatively complex. Specifically, the user is unable to know from the main menu interface of applications which applications have desktop widgets, and the user firstly has to enter into a widget list of applications, determine whether an application has a widget and then select a corresponding widget from the widget list to add the widget. Further, even when some widget has been selected, there might be no sufficient space available on the desktop, which will lead to a failure to add the desktop widget and affect the user's experience. Accordingly, an improvement must be made thereon.

### SUMMARY OF THE INVENTION

The present disclosure provides an application management method for a mobile terminal, which can solve the problem that the application management is complex and inconvenient to use in the prior art.

To solve the aforesaid technical problem, a solution adopted by the present disclosure is as follows: an application management method for a mobile terminal, comprising: acquiring all information of applications that have been installed or upgraded in the mobile terminal; determining whether each of the applications has a desktop widget; if the determination result is "yes", then displaying an icon corresponding to an application having the desktop widget in an icon list in a first displaying manner, querying a total number of desktop widgets that the application corresponding to the icon displayed in the first manner has, and displaying the total number at a predetermined position on the icon; and if the determination result is "no", then displaying the icon corresponding to the application not having the desktop widget in the icon list in a second displaying manner.

The application management method further comprises: popping up an option menu for adding a desktop widget after the user selects the icon displayed in the first displaying manner via a predetermined manner; after the user has selected to add the desktop widget, calculating a current number of desktop widgets that are smaller than a currently remaining space according to a space to be occupied by each of the desktop widgets that the application corresponding to the icon has and the currently remaining space on the desktop of the mobile terminal; and if the current number is greater than 1, then popping up a desktop widget selection list for the user to select the desktop widget that needs to be added to the desktop.

The application management method further comprises: if the current number is equal to 1, then directly adding the desktop widget to the desktop; and if the current number is smaller than 1, then prompting a failed addition or to exit. The application management method further comprises: the first displaying manner is to display in a highlighted form, a flashing form or in an animation form.

To solve the aforesaid technical problem, another solution adopted by the present disclosure is as follows: an application management method for a mobile terminal, comprising: acquiring all information of applications that have been installed or upgraded in the mobile terminal; determining whether each of the applications has a desktop widget; and if the determination result is "yes", then displaying an icon corresponding to an application having the desktop widget in an icon list in a first displaying manner.

The application management method further comprises: querying a total number of desktop widgets that the application corresponding to the icon displayed in the first manner has; and displaying the total number at a predetermined position on the icon.

The application management method further comprises: popping up an option menu for adding a desktop widget after the user selects the icon displayed in the first displaying manner via a predetermined manner; after the user has selected to add the desktop widget, calculating a current number of desktop widgets that are smaller than a currently remaining space according to a space to be occupied by each of desktop widgets that the application corresponding to the icon has and the currently remaining space on the desktop of the mobile terminal; and if the current number is greater than 1, then popping up a desktop widget selection list for the user to select the desktop widget that needs to be added to the desktop.

The application management method further comprises: if the current number is equal to 1, then directly adding the desktop widget to the desktop; and if the current number is smaller than 1, then prompting a failed addition or to exit.

The application management method further comprises: if the determination result is "no", then displaying the icon corresponding to the application not having the desktop widget in the icon list in a second displaying manner.

The first displaying manner is to display in a highlighted form, a flashing form or in an animation form.

To solve the aforesaid technical problem, yet another solution adopted by the present disclosure is as follows: a mobile terminal, comprising: an acquiring module, being configured to acquire all information of applications that have been installed or upgraded in the mobile terminal; a determining module, being configured to determine whether each of the applications has a desktop widget; and a displaying module, being configured to, if the determination result is "yes", display an icon corresponding to an application having the desktop widget in an icon list in a first displaying manner.

The mobile terminal further comprises: a querying module, being configured to query a total number of desktop widgets that the application corresponding to the icon displayed in the first manner has; and the displaying module is further configured to display the total number at a predetermined position on the icon.

The mobile terminal further comprises a first responding module, a calculating module and a second responding module. The first responding module is configured to pop up an option menu for adding a desktop widget after the user selects the icon displayed in the first displaying manner via a predetermined manner; the calculating module is configured to, after the user has selected to add the desktop widget, calculate the current number of widgets that are smaller than a currently remaining space according to a space to be occupied by each widget that the application corresponding to the icon has and the currently remaining space on the desktop of the mobile terminal; and the second responding module is configured to, if the current number is greater than 1, pop up a desktop widget selection list for the user to select the desktop widget that needs to be added to the desktop.

The second responding module is further configured to: if the current number is equal to 1, then directly add the desktop widget to the desktop; and if the current number is smaller than 1, then prompt a failed addition or to exit.

The present disclosure has the following benefits: as compared to the prior art, the application management method for a mobile terminal and the mobile terminal according to the present disclosure display an icon corresponding to an application having a desktop widget in a distinctive first displaying manner, so the user can accomplish the operation of adding the desktop widget of the application directly in the system main menu without having to enter into the widget list. The present disclosure is simple and convenient to use and provides the user with good experience in use.

### BRIEF DESCRIPTION OF THE DRAWINGS

FIG. 1 is a schematic block diagram of an embodiment of a mobile terminal according to the present disclosure; and
FIG. 2 is a flowchart diagram of an embodiment of an application management method for a mobile terminal according to the present disclosure.

### DETAILED DESCRIPTION OF THE INVENTION

Hereinbelow, technical solutions of embodiments of the present disclosure will be described clearly and completely with reference to the attached drawings. Obviously, embodiments described herein are only some of but not all of the embodiments of the present disclosure. All other embodiments that can be obtained without making inventive efforts by those of ordinary skill in the art upon reviewing the disclosures of the embodiments of the present disclosure shall fall within the scope of the present disclosure.

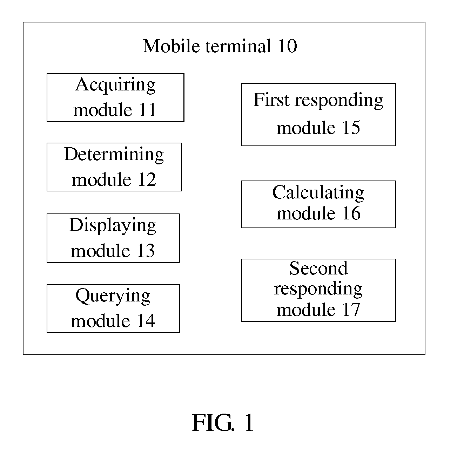

Referring to FIG. 1, there is shown a schematic block diagram of an embodiment of a mobile terminal according to the present disclosure. As shown in FIG. 1, the mobile terminal 10 comprises an acquiring module 11, a determining module 12 and a displaying module 13. The mobile terminal 10 of the present disclosure is used for management of applications, including adding a desktop widget of an application to a screen of the mobile terminal. For a new application, the user can download it from a network and install it, or install it via a storage device such as an SD card. Management of applications may also include upgrading an original application.

The acquiring module 11 is configured to acquire all information of applications that have been installed or upgraded in the mobile terminal. The acquiring module 11 records information of all the applications, including names of the applications, installation paths and authorities of the applications and so on. Meanwhile, if an application has a desktop widget, the acquiring module 11 also records information of the desktop widget, including the name, type and thumbnail of the widget.

The determining module 12 is configured to determine whether each of the applications has a desktop widget. In order to display an application having a desktop widget and an application not having a widget in different manners after the all information of applications has been acquired by the acquiring module 11, the determining module 12 determines whether each of the applications has a widget according to the information recorded by the acquiring module 11 each time the application main menu is displayed.

The displaying module 13 is configured to, if the determination result of the determining module 12 is "yes", display an icon corresponding to the application having the desktop widget in a first displaying manner in an icon list, and if the determination result of the determining module 12 is "no", display an icon corresponding to the application not having a desktop widget in a second displaying manner in the icon list. The application main menu is mainly responsible for listing icons of all the applications and corresponding names thereof. When the application main menu is displayed, the icons of the applications and the corresponding names are listed in a certain order, and the listing order is generally ranked according to the UNICODE encoding of symbol strings of the application names or according to types of the applications, or the applications can be dragged by the user to order the applications according to the user's preferences. Each node in the list comprises a piece of application icon and name information. Similarly, the application nodes in the list may be ranked in an order and displayed in this order.

In this embodiment, the mobile terminal further comprises a querying module 14, which is configured to query the total number of desktop widgets that the application corresponding to the icon displayed in the first manner has. After the total number of desktop widgets that the application corresponding to the icon is queried by the querying module 14, the displaying module 13 is further configured to display the total number at a predetermined position on the icon. In the application main menu interface, the querying module 14 queries the widget information to obtain the total number of desktop widgets and then returns the information of the total number to the displaying module 13, which then appends an Arabic numeral indicating the total number of desktop widgets to the icon of the application.

The mobile terminal 10 of the present disclosure further comprises a first responding module 15, a calculating module 16 and a second responding module 17. The first responding module 15 is configured to pop up an option menu for adding a widget after the user selects, in a predetermined manner, the icon displayed in the first displaying manner. When the user selects an icon displayed in the first displaying manner to add a desktop widget (e.g., by long pressing the icon of the application), the first responding module 15 responds immediately to pop up an option menu, which lists executable prompts for prompting the user whether to add the desktop widget.

The calculating module 16 is configured to, after the user has selected to add the desktop widget, calculate the current number of widgets that are smaller than a currently remaining space according to a space to be occupied by each widget that the application corresponding to the icon has and the currently remaining space on the desktop of the mobile terminal. Because different desktop widgets are different from each other and even identical widgets may be of different types (e.g., the simple type and the complex type), spaces occupied by the widgets are different. However, the space of the screen is fixed and can only allow for addition of a limited number of desktop widgets. For example, assuming that the currently remaining space is 3x3, then spaces that desktop widgets need to occupy that are smaller than the currently remaining space include 3x2, 3×1, 2×3, 2×2, 2×1, 1×3, 1×2, and 1×1.

The second responding module 17 is configured to, if the current number is greater than 1, pop up a desktop widget selection list for the user to select the desktop widget that needs to be added to the desktop. If the calculating module 16 calculates the current number to be greater than 1, it means that there is at least one desktop widget of which the space that needs to be occupied is not greater than the currently remaining space, and then the second responding module 17 picks up these desktop widgets for selection by the user.

The second responding module 17 is further configured to: if the current number is equal to 1, then directly add the desktop widget to the desktop; and if the current number is smaller than 1, then prompt a failed addition or to exit. If the calculating module 16 calculates the number of desktop widgets that can be added to be 1, the second responding module 17 directly adds the desktop widget that can be added to the screen without popping up a desktop widget list for selection by the user. If the calculating module 16 calculates the number of desktop widgets that can be added to be smaller than 1, it means that no sufficient space is available for adding any widget in the screen and then the second responding module 17 will prompt a failed addition or automatically exit from the adding operation.

In this embodiment, the first displaying manner is to display in a highlighted form, a flashing form or in an animation form. As described above, icons of applications have two forms: one is to display an icon of an application having a desktop widget in the first displaying manner, and the other is to display an icon of an application not having a desktop widget in the second displaying manner. Thus, the displaying module 13 can choose different displaying manners to display an icon of an application when the icon is to be displayed. Displaying in the flashing form or the animation form provides a sense of movement, but has relatively complex settings. Displaying in the animation form requires multiple static pictures to be saved, and when an application comprises a widget, the multiple static pictures will be cyclically displayed in a certain frequency to provide an animation displaying effect.

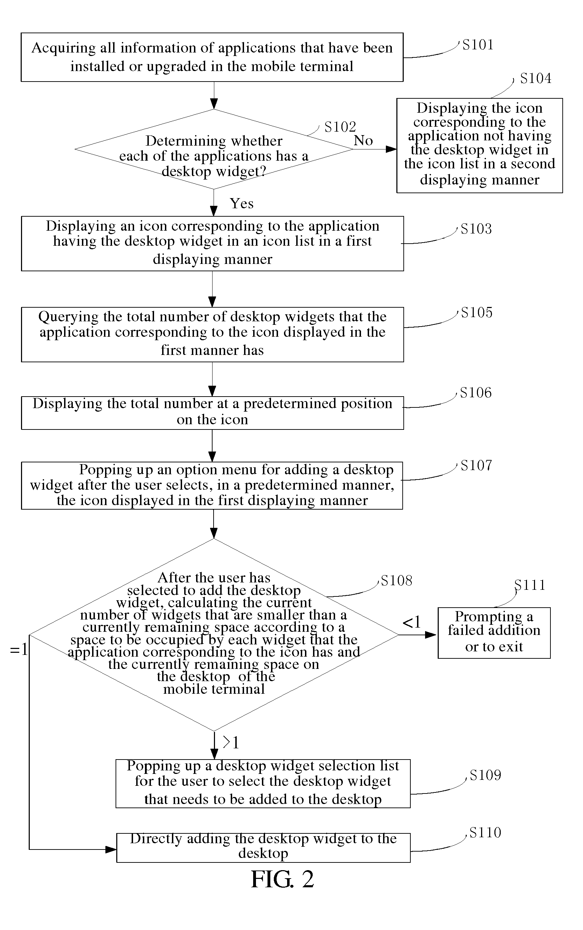

FIG. 2 is a flowchart diagram of an embodiment of an application management method for a mobile terminal according to the present disclosure. As shown in FIG. 2, the method comprises the following steps:
Step S101, acquiring all information of applications that have been installed or upgraded in the mobile terminal.

When a new application is installed by the user, firstly all information of the application is recorded.

Step S102: determining whether each of the applications has a desktop widget.

It is determined whether the application has a desktop widget function, and if the application has a desktop widget function, information of the desktop widget is also recorded.

Step S103: if the determination result is "yes", then displaying an icon corresponding to the application having the desktop widget in an icon list in a first displaying manner.

If it is determined that the application has a desktop widget, then this application may be distinctively displayed in a highlighted form in the application main menu icon list.

Step S104: if the determination result is "no", then displaying the icon corresponding to the application not having the desktop widget in the icon list in a second displaying manner.

If it is determined that the application does not have a desktop widget, then the application is displayed in a second displaying manner (i.e., a normal manner) in the application main menu icon list.

Step S105: querying the total number of desktop widgets that the application corresponding to the icon displayed in the first manner has.

For the application having desktop widgets, the number of widgets that the application has is queried from the system.

Step S106: displaying the total number at a predetermined position on the icon.

The number of widgets is displayed in the form of an Arabic numeral at a lower left position or at some other position on the icon.

Step S107: popping up an option menu for adding a widget after the user selects, in a predetermined manner, the icon displayed in the first displaying manner.

The first displaying manner may be preset by the user to be in a highlighted form, a flashing form or an animation form, and the second displaying manner may be preset by the user to be in a static displaying form. After the icon is determined, an option menu for adding the desktop widget is popped up for the user to select and to add.

Step S108: after the user has selected to add the desktop widget, calculating the current number of widgets that are smaller than a currently remaining space according to a space to be occupied by each widget that the application corresponding to the icon has and the currently remaining space on the desktop of the mobile terminal.

The number of widgets that can be accommodated in the screen is calculated according to the size of the widget selected by the user.

Step S109: if the current number is greater than 1, then popping up a desktop widget selection list for the user to select the desktop widget that needs to be added to the desktop.

If the number of desktop widgets that can be added is calculated to be greater than 1, then another selection list is popped up for the user to select.

Step S110: if the current number is equal to 1, then directly adding the desktop widget to the desktop.

Step S111: if the current number is smaller than 1, then prompting a failed addition or to exit.

If the number is smaller than 1, it means that no space is available for adding any widget in the screen, and the system will prompt a failed addition or automatically exit from the adding operation.

According to the above descriptions, the application management method for a mobile terminal and the mobile terminal according to the present disclosure display an icon corresponding to an application having a desktop widget in a distinctive first displaying manner, so the user can accomplish the operation of adding the desktop widget of the application directly in the system application main menu without having to enter into the widget list and the desktop widget can be added automatically. The present disclosure is simple and convenient to use and provides the user with good experience in use.

What described above are only the embodiments of the present disclosure, but are not intended to limit the scope of the present disclosure. Any equivalent structures or equivalent process flow modifications that are made according to the specification and the attached drawings of the present disclosure, or any direct or indirect applications of the present disclosure in other related technical fields shall all be covered within the scope of the present disclosure.

## Claims

1. An application management method for a mobile terminal, comprising:
acquiring all information of applications that have been installed or upgraded in the mobile terminal;
determining whether each of the applications has a desktop widget;
if the determination result is "yes", then displaying an icon corresponding to an application having the desktop widget in an icon list in a first displaying manner, querying a total number of desktop widgets that the application corresponding to the icon displayed in the first manner has, and displaying the total number at a predetermined position on the icon; and
if the determination result is "no", then displaying the icon corresponding to the application not having the desktop widget in the icon list in a second displaying manner.

2. The application management method of claim 1, further comprising:
popping up an option menu for adding the desktop widget after the user selects the icon displayed in the first displaying manner via a predetermined manner;
after the user has selected to add the desktop widget, calculating a current number of desktop widgets that are smaller than a currently remaining space according to a space to be occupied by each of the desktop widgets that the application corresponding to the icon has and the currently remaining space on the desktop of the mobile terminal; and
if the current number is greater than 1, then popping up a desktop widget selection list for the user to select the desktop widget that needs to be added to the desktop.

3. The application management method of claim 2, further comprising:
if the current number is equal to 1, then directly adding the desktop widget to the desktop; and
if the current number is smaller than 1, then prompting a failed addition or to exit.

4. The application management method of claim 1, wherein the first displaying manner is to display in a highlighted form, a flashing form or in an animation form.

5. An application management method for a mobile terminal, comprising:
acquiring all information of applications that have been installed or upgraded in the mobile terminal;
determining whether each of the applications has a desktop widget; and
if the determination result is "yes", then displaying an icon corresponding to an application having the desktop widget in an icon list in a first displaying manner.

6. The application management method of claim 5, further comprising:
querying a total number of desktop widgets that the application corresponding to the icon displayed in the first manner has; and
displaying the total number at a predetermined position on the icon.

7. The application management method of claim 5, further comprising:
popping up an option menu for adding a desktop widget after the user selects the icon displayed in the first displaying manner via a predetermined manner;
after the user has selected to add the desktop widget, calculating a current number of desktop widgets that are smaller than a currently remaining space according to a space to be occupied by each of the desktop widgets that the application corresponding to the icon has and the currently remaining space on the desktop of the mobile terminal; and
if the current number is greater than 1, then popping up a desktop widget selection list for the user to select the desktop widget that needs to be added to the desktop.

8. The application management method of claim 7, further comprising:
if the current number is equal to 1, then directly adding the desktop widget to the desktop; and
if the current number is smaller than 1, then prompting a failed addition or to exit.

9. The application management method of claim 5, further comprising:
if the determination result is "no", then displaying the icon corresponding to the application not having the desktop widget in the icon list in a second displaying manner.

10. The application management method of claim 5, wherein the first displaying manner is to display in a highlighted form, a flashing form or in an animation form.

11. A mobile terminal, comprising:
an acquiring module, being configured to acquire all information of applications that have been installed or upgraded in the mobile terminal;
a determining module, being configured to determine whether each of the applications has a desktop widget; and
a displaying module, being configured to, if the determination result is "yes", display an icon corresponding to an application having the desktop widget in an icon list in a first displaying manner.

12. The mobile terminal of claim 11, further comprising:
a querying module, being configured to query a total number of desktop widgets that the application corresponding to the icon displayed in the first manner has; and
the displaying module is further configured to display the total number at a predetermined position on the icon.

13. The mobile terminal of claim 11, further comprising a first responding module, a calculating module and a second responding module,
the first responding module is configured to pop up an option menu for adding a desktop widget after the user selects the icon displayed in the first displaying manner via a predetermined manner;
the calculating module is configured to, after the user has selected to add the desktop widget, calculate a current number of desktop widgets that are smaller than a currently remaining space according to a space to be occupied by each of the desktop widgets that the application corresponding to the icon has and the currently remaining space on the desktop of the mobile terminal; and
the second responding module is configured to, if the current number is greater than 1, pop up a desktop widget selection list for the user to select the desktop widget that needs to be added to the desktop.

14. The mobile terminal of claim 13, wherein the second responding module is further configured to: if the current number is equal to 1, then directly add the desktop widget to the desktop; and if the current number is smaller than 1, then prompt a failed addition or to exit.
